# EUROPEAN PATENT APPLICATION

(11) **EP 1 506 718 A1**
(43) Date of publication of application: **16.02.2005**
(21) Application number: 03425549.7
(22) Date of filing: 14.08.2003
(51) Int. Cl.: A23L 3/3436

(54) **Oxygen-scavenging compositions and the application thereof in packaging and containers**

(71) Applicant: COBARR S.p.A., I-03012 Anagni Frosinone (IT)
(72) Inventor: Al Ghatta, Hussain, 03014 Fiuggi (Frosinone) (IT)
(74) Representative: Gerbino, Angelo

(57) **Abstract**

An oxygen scavenging composition is set forth in which the composition contains a water hydrolysable Lewis acid salt and/or its adduct which is deposited upon oxidizable metal particles by creating a solution of a water hydrolysable Lewis acid in an essentially moisture free organic solvent, contacting the solution with metal and then evaporating the solvent from the solid. Also set forth are walls of containers which contain this composition.

## Description

### FIELD OF THE INVENTION

This invention relates to oxygen-scavenging compositions having utility in packaging, particularly suitable for being incorporated into film-forming polymers, preferably aromatic polyester resins and the wall of a container made from the aromatic polyester containing the scavenging composition.

### BACKGROUND OF THE INVENTION

Products sensitive to oxygen, particularly foods, beverages and medicines, deteriorate or spoil in the presence of oxygen. One approach to reducing these difficulties is to package such products in a container comprising at least one layer of a so-called "passive" gas barrier film that can act as a physical barrier and reduces or eliminates the transmission of oxygen through the container wall but does not react with oxygen.

Another approach to achieving or maintaining a low oxygen environment inside a package is to use a packet containing a rapid oxygen absorbent material. The packet, also sometimes referred to as a pouch or sachet, is placed in the interior of the package along with the product. The oxygen absorbent material in the sachet protects the packaged product by reacting with the oxygen before the oxygen reacts with the packaged product.

Although oxygen absorbent or scavenger materials used in packets can react chemically with oxygen in the package, they do not prevent external oxygen from penetrating into the package. Therefore, it is common for packaging using such packets to include additional protection such as wrappings of passive barrier films of the type described above. This adds to product costs.

In view of the sachet's disadvantages and limitations, it has been proposed to incorporate the "active" oxygen absorbent, i.e. one that reacts with oxygen, directly into the walls of a packaging article. Because such a packaging article is formulated to include a material that reacts with the oxygen permeating through its walls, the package is said to provide an "active-barrier" as distinguished from passive barrier that merely blocks the transmission of oxygen but does not react with it. Active-barrier packaging is an attractive way to protect oxygen-sensitive products because it not only prevents oxygen from reaching the product from the outside, it can also absorb oxygen present within a container.

One approach for obtaining active-barrier packaging is to incorporate a mixture of an oxidizable metal (e.g., iron) and an electrolyte (e.g., sodium chloride) into a suitable resin, melt process the resulting resin into a monolayer or multilayer sheet or film that eventually form the resulting oxygen scavenger-containing wall or walls of the rigid or flexible container or other packaging article. It should be appreciated that references to the container sidewall and container wall also refer to the lid, bottom and top sides of the container, and a film that may be wrapped around the product such as meat wraps. One difficulty with scavenger systems incorporating an oxidizable metal or metal compound and a metal halide into a thermoplastic layer is the inefficiency of the oxidation reaction. High loading of scavenger compositions and relatively large amounts of electrolyte are often used to obtain sufficient oxygen absorption scavenging rate and capacity in active-barrier packaging.

According to US 5,744,0561, oxygen-scavenging compositions that exhibit improved oxygen-absorption efficiency relative to systems such as iron and sodium chloride are obtainable by including a non-electrolytic, acidifying component in the composition In the presence of moisture, the combination of the electrolyte and the acidifying component promotes the reactivity of metal with oxygen to a greater extent than does either alone. However, the acidifying component when used alone does not exhibit sufficient oxygen-scavenging properties.

A particularly preferred oxygen-scavenging composition according to the US patent comprises iron powder, sodium chloride and sodium acid pyrophosphate, in amounts from about 10 to 150 parts by weight of sodium chloride plus sodium acid pyrophosphate per hundred parts by weight iron. Preferably 2 parts of scavenging composition are incorporated into 100 parts by weight of a thermoplastic polymer.

An objection to using conventional oxidizable metals compositions is the growth of the particle as it oxidizes. It has been observed that as the particle oxidizes, the oxidized material blooms away from the particle making the particle appear larger over time and the color shifts towards the color of the oxidized metal. In the case of iron, the color of the container wall shifts to yellow and yellow orange (rust).

Beverage or food containers presenting the above blooms are commercially unacceptable because the consumer incorrectly attributes the color to deterioration of the product inside the container.

Another object of the present invention is to provide improved oxygen-scavenging compositions particularly suitable for providing container walls and films not presenting a noticeable bloom or color shift upon aging, preferably having haze values within the commercially acceptable range.

Another object of the invention is to provide oxygen-scavenging compositions which, when incorporated into polyester resins, do not cause excessive polymer degradation as measured by the intrinsic viscosity during melt processing.

Another object of the invention is to provide oxygen-scavenging compositions that can be effectively used at relatively low levels in a wide range of packaging films and sheets including laminates and coextruded multilayer films and sheets.

Another object of the invention is to provide a rapidly reactive system at electrolyte concentrations previously considered too low to be an effective oxygen scavenger.

Another object of the invention is to provide a rapidly reactive system which can remain dormant until the package is filled and the humidity or moisture of the package triggers the scavenging reaction. This provides a significant cost advantage over currently practiced organic based scavengers which are active when the container is made or require a separate activation step such as light irradiation.

Other objects will be apparent to those skilled in the art.

### SUMMARY AND DETAILED DESCRIPTION OF THE INVENTION

The above objectives can be attained according to the invention by providing compositions having high oxygen-scavenging efficiency in presence of humidity or liquid phase water, comprising oxidizable metal particles, particularly elemental iron, and, a water hydrolysable Lewis acid salt or adduct thereof which is preferably soluble in ethanol and is deposited on the metal from an organic solution in amounts greater than 0.1, but preferably less than 5.0 wt% by the weight of the metal particle. Preferably, ethanol will solubilize at least 0.5 wt% of hydrolisable Lewis acid salt. The compounds suitable to solubilize the Lewis acid salt and/or form adducts with the Lewis acid salt are organic solvents, preferably electron-donor compounds such as alcohols, ethers, ketones and esters of carboxylic acids.

Preferred water hydrolisable Lewis acid salts are the halides, in particular chloride and bromide, more preferably AlCl₃, AlBr₃, FeCl₂ and FeBr₂. It has been found that the iron particles with deposited water hydrolysable Lewis acid salt compositions can also be heat-treated at temperatures of about 100° to 250°C for considerable amounts of time without loss of the oxygen-scavenging efficiency.

The deposition on iron of the water hydrolysable Lewis acid salt and/or its adduct is made from essentially moisture free organic solvents which are subsequently removed by evaporation, preferably at reduced pressure. Examples of solvents are alcohols such as ethanol, methanol and isopropanol, ethers, ketones and alkyl esters of acetic acid such as ethylacetate.

As described in Example 7A, the deposition of certain water hydrolysable Lewis acid salts, such as FeCl₂, can also be made from a water hydrolysable Lewis acid salt which is formed in situ by reaction of the metal with an acid as opposed to dissolving the Lewis acid in the solvent.

The iron particles preferably have a numeral average size less than 50 µm. While the electrolytic reduced unnanealed or annealed iron obtained is preferred, carbonyl and carbon monoxide or hydrogen reduced sponge irons are also suitable. It should be noted that hydrogen and carbon monoxide reduced forms of iron are less reactive than the electrolytic reduced iron.

Iron does not need to be 100% pure. Minor alloying elements such as nickel, chromium, silicon and other compounds can be present. Mixtures of iron with minor amounts of other metals, preferably more noble than iron, can be used. The iron-based compositions are incorporated into the wall of a container made from film-forming polymers, preferably aromatic polyester, in amounts from 500 to 10000 parts by weight per million parts by weight polymer, preferably 1000 to 6000 parts per million parts polymer.

Suitable polyesters include those produced from aromatic, aliphatic or cycloaliphatic dicarboxylic acids of from 4 to about 40 carbon atoms and aliphatic or alicyclic glycols having from 2 to about 24 carbon atoms.

Polyesters employed in the present invention can be prepared by conventional polymerization procedures well known in the art. The polyester polymers and copolymers may be prepared, for example, by melt phase polymerization involving the reaction of a diol with a dicarboxylic acid, or its corresponding diester. Various copolymers resulting from use of multiple diols and diacids may also be used. Polymers containing repeating units of only one chemical composition are homopolymers. Polymers with two or more chemically different repeat units in the same macromolecule are termed copolymers. The diversity of the repeat units depends on the number of different types of monomers present in the initial polymerization reaction. In the case of polyesters, copolymers include reacting one or more diols with a diacid or multiple diacids, and are sometimes referred to as terpolymers.

As noted hereinabove, suitable dicarboxylic acids include those comprising from about 4 to about 40 carbon atoms. Specific dicarboxylic acids include, but are not limited to, terephthalic acid, isophthalic acid, naphthalene 2,6-dicarboxylic acid, cyclohexanedicarboxylic acid, cyclohexanediacetic acid, diphenyl-4,4'-dicarboxylic acid, 1,3-phenylenedioxydiacetic acid, 1,2-phenylenedioxydiacetic acid, 1,4-phenylenedioxydiacetic acid, succinic acid, glutaric acid, adipic acid, azelaic acid, sebacic acid, and the like. Specific esters include, but are not limited to, phthalic esters and naphthalic diesters.

These acids or esters may be reacted with an aliphatic diol preferably having from about 2 to about 24 carbon atoms, a cycloaliphatic diol having from about 7 to about 24 carbon atoms, an aromatic diol having from about 6 to about 24 carbon atoms, or a glycol ether having from 4 to 24 carbon atoms. Suitable diols include, but are not limited to, 1,4-butenediol, trimethylene glycol, 1,6-hexanediol, 1,4-cyclohexanedimethanol, diethylene glycol, resorcinol, and hydroquinone.

Polyfunctional comonomers can also be used, typically in amounts of from about 0.1 to about 3 mole percent. Suitable comonomers include, but are not limited to, trimellitic anhydride, trimethylolpropane, pyromellitic dianhydride (PMDA), and pentaerythritol. Polyester-forming polyacids or polyols can also be used. Blends of polyesters and copolyesters may also be useful in the present invention.

One preferred polyester is polyethylene terephthalate (PET) formed from the approximate 1:1 stoichiometric reaction of terephthalic acid, or its ester, with ethylene glycol. Another preferred polyester is polyethylene naphthalate (PEN) formed from the approximate 1:1 to 1:1.6 stoichiometric reaction of naphthalene dicarboxylic acid, or its ester, with ethylene glycol. Yet another preferred polyester is polybutylene terephthalate (PBT). Copolymers of PET, copolymers of PEN, and copolymers of PBT are also preferred. Specific copolymers and terpolymers of interest are PET with combinations of isophthalic acid or its diester, 2,6 naphthalic acid or its diester, and/or cyclohexane dimethanol.

The esterification or polycondensation reaction of the carboxylic acid or ester with glycol typically takes place in the presence of a catalyst. Suitable catalysts include, but are not limited to, antimony oxide, antimony triacetate, antimony ethylene glycolate, organomagnesium, tin oxide, titanium alkoxides, dibutyl tin dilaurate, and germanium oxide. These catalysts may be used in combination with zinc, manganese, or magnesium acetates or benzoates. Catalysts comprising antimony are preferred. Another preferred polyester is polytrimethylene terephthalate (PTT). It can be prepared by, for example, reacting 1,3-propanediol with at least one aromatic diacid or alkyl ester thereof. Preferred diacids and alkyl esters include terephthalic acid (TPA) or dimethyl terephthalate (DMT). Accordingly, the PTT preferably comprises at least about 80 mole percent of either TPA or DMT. Other diols which may be copolymerized in such a polyester include, for example, ethylene glycol, diethylene glycol, 1,4-cyclohexane dimethanol, and 1,4-butanediol. Aromatic and aliphatic acids which may be used simultaneously to make a copolymer include, for example, isophthalic acid and sebacic acid.

Preferred catalysts for preparing PTT include titanium and zirconium compounds. Suitable catalytic titanium compounds include, but are not limited to, titanium alkylates and their derivatives, titanium complex salts, titanium complexes with hydroxycarboxylic acids, titanium dioxide-silicon dioxide-co-precipitates, and hydrated alkaline-containing titanium dioxide. Specific examples include tetra-(2-ethylhexyl)-titanate, tetrastearyl titanate, diisopropoxy-bis(acetyl-acetonato)-titanium, di-n-butoxy-bis(triethanolaminato)-titanium, tributylmonoacetyltitanate, triisopropyl monoacetyltitanate, tetrabenzoic acid titanate, alkali titanium oxalates and malonates, potassium hexafluorotitanate, and titanium complexes with tartaric acid, citric acid or lactic acid. Preferred catalytic titanium compounds are titanium tetrabutylate and titanium tetraisopropylate. The corresponding zirconium compounds may also be used.

The polymer using this invention may also contain small amounts of phosphorous compounds, such as phosphates, and a catalyst such as a cobalt compound, that tends to impart a blue hue. Also, small amounts of other polymers such as polyolefins can be tolerated in the continuous matrix.

The melt phase polymerization described above may be followed by a crystallization step, then a solid phase polymerization (SSP) step to achieve the intrinsic viscosity necessary for the manufacture of certain articles such as bottles. The crystallization and polymerization can be performed in a tumbler dryer reaction in a batch-type system.

Alternatively, the crystallization and polymerization can be accomplished in a continuous solid state process whereby the polymer flows from one vessel to another after its predetermined treatment in each vessel. The crystallization conditions preferably include a temperature of from about 100°C to about 150°C. The solid phase polymerization conditions preferably include a temperature of from about 200°C to about 232°C, and more preferably from about 215°C to about 232°C. The solid phase polymerization may be carried out for a time sufficient to raise the intrinsic viscosity to the desired level, which will depend upon the application. For a typical bottle application, the preferred intrinsic viscosity is from about 0.65 to about 1.0 deciliter/gram, as determined by ASTM D-4603-86 at 30 °C in a 60/40 by weight mixture of phenol and tetrachloroethane. The time required to reach this viscosity may range from about 8 to about 21 hours.

In one embodiment of the invention, the article-forming polyester of the present invention may comprise recycled polyester or materials derived from recycled polyester, such as polyester monomers, catalysts, and oligomers. Examples of other film-forming polymers include polyamides, polycarbonate, PVC and polyolefins such as polyethylene and polypropylene.

The oxygen-scavenging compositions can be added directly to the thermoplastic polymer compounding or melt-fabrication operation, such as the extrusion section thereof, after which the molten mixture can be advanced directly to the article-fabrication line.

Alternatively, the compositions can be compounded into masterbatch concentrate pellets, which can be further incorporated into packaging polymers for further processing into the desired article.

The concentrates in polyester resins preferably contain more than 20 parts of oxygen-scavenging composition per hundred parts of resin. Containers having at least one wall incorporating the oxygen-scavengers of the present invention are the preferred articles. Cups, pouches, boxes, bottles, lids and wrapped films are also examples of such walls. Stretched and unstretched films are included in the definition of container walls.

It is also contemplated to provide articles, with both active and passive oxygen barrier properties through use of one or more passive gas barrier layers in conjunction with one or more layers according to the invention. Alternatively, the passive barrier and oxygen scavenging composition may both be in the same layer.

Thus for products calling for long shelf-life, an oxygen scavenging layer according the present invention can be used in conjunction with a passive gas barrier layer.

In addition to reducing the large colored bloom after reacting with oxygen, the oxygen-scavenging compositions of the present invention significantly reduce the amount polymer degradation as measured by loss of intrinsic viscosity (I.V.) of the aromatic polyesters occurring in the melt-processing of these resins e.g. injection molding preforms for bottles or extruding sheet and film. It has also been observed that the intrinsic viscosity loss of the preform attributed to the scavenger was not higher than 60% of the I.V. loss in the absence of the scavenger.

The I.V. loss of preforms made using the oxygen scavenger composition is 80% less than the I.V. loss of scavenger compositions with comparable oxygen reaction capability (Table B).

Another advantage of the claimed scavengers and of the polymers and manufactured articles into which they are incorporated is their storage stability i.e. their lack of reactivity in the absence of humidity, which permits long storage periods before filling.

Another characterizing aspect is the remarkably high oxygen-absorption rate performed by the scavengers not incorporated into polymers, which is much higher than that of known scavengers and which is performed without the aid of NaCl or similar electrolytes.

As mentioned, the containers having at least a light transmitting wall comprising the oxygen-scavenging compositions of the present invention, advantageously possess both high scavenging efficiency and the unique property of the reduced bloom of the particle upon reacting with oxygen in presence of humidity. The reduced bloom size also occurs in containers having haze values falling within a commercially acceptable range.

Many polymers are transparent, but polymers that are transparent to visible light may become opaque, as the result of the presence of additives such as fillers, scavengers, stabilizers, and similar additives. The opacity results from light-scattering occurring within the material.

Haze is the measure of the amount of light deviation from the direction of transmittance by at least 2.5 degrees.

The color and brightness of a polyester article can be observed visually, and can also be quantitatively determined by a HunterLab ColorQuest Spectrometer. This instrument uses the 1976 CIE, a*, b* and L* designation of color and brightness. An a* coordinate defines a color axis wherein plus values are toward the red end of the color spectrum and minus values are toward the green end.

The b* coordinate defines a second color axis, wherein plus values are toward the yellow end and minus values are toward the blue end.

Higher L* values indicate enhanced brightness of the material.

As indicated, the containers comprising at least one wall incorporating the oxygen scavengers of the present invention do not present as large a bloom as conventional scavengers upon aging.

The microscope observation of the wall upon aging shows a limited number of black dots uniformly distributed within the wall; the wall area occupied by the dots is a small fraction of the total area. By contrast, the wall of the containers incorporating prior art oxygen-scavengers show a marked visual dots due to the formation of large blooms distributed along the wall. Conventional scavengers also show a yellow/orange coloration. The compositions listed in the examples showed a darkening of the container wall, but no yellow/orange shift in color.

The color parameters of the wall of the containers of the present invention show a small decrease of the minus a* values and plus b* values referred to the a* and b* values of the wall not containing scavengers, whereas the walls incorporating prior art scavengers show plus a* values and increased plus b* values.

Preferred wall-containers are stretched bottles with a thickness from about 280 to 410 µm and haze values of about 20% or less. Note that all bottle sidewalls used in the examples fall within the thickness noted.

The following examples are provided for purpose of illustrating the manufacture of the composition and the composition properties and are not intended to limit the scope of the invention. The composition is made by depositing a water hydrolysable Lewis acid salt and/or its adduct upon iron powder by creating a solution of a water hydrolysable Lewis acid in an essentially moisture free organic solvent, contacting the solution with iron and then evaporating the solvent from the solid.

It should be noted that it is unclear whether it is the original water hydrolysable Lewis acid salt which is deposited upon the iron or an adduct or reaction product of the Lewis acid with the organic solvent. The exothermic nature of the dissolution, the small amount of white vapors and the literature (see Aluminum Chloride [alias its reaction product(s) with ethanol] for the stablization of poly(vinyl) chloride, Starnes, William H, Seren, Frantz, and Chung, Haksoo Thomas, Polymer Degradation and Stability 56 (1977) describing the literature noting a reaction of AlCl₃ with ethanol) all point a reaction. Analysis of the iron powder indicates that all the Chlorine has been deposited on the iron, which is indicative that no reaction occurred. It is for this reason that the acid and its adducts is considered part of the invention.

### EXAMPLE 1

All the operations of this example were conducted to exclude or mimimize the presence of oxygen and humidity. 5.0 grams of AlCl₃ (Aldrich Chemical, 99.9%) were weighed in a nitrogen purged sample vial inside a nitrogen glove bag and capped. 200 grams of iron powder (electrolytically reduced and annealed, -325 mesh, -45 µm) was placed into a nitrogen glove bag for later addition to the solution obtained by dissolving AlCl₃ with ethanol.

A 1000 ml nitrogen purged reaction flask with stir bar was filled with 500 ml ethanol (Aldrich, absolute, > 99.5% vol., ACS reagent) in a way to minimize exposure to air. The 5.0 g of AlCl₃ was added through the flask neck. After the AlCl₃ addition, the neck of the reaction flask was immediately attached to a Claisen adapter/condenser assembly. The exothermic dissolution of the AlCl₃ in ethanol evolved some white vapors. The white vapors were carried to a NaOH scrubber by a nitrogen sweep. Although the mixture was stirred for 15 minutes under nitrogen, the added AlCl₃ was completely dissolved in about 10 minutes yielding a clear solution.

The flask was disconnected from the Claisen adapter/condenser assembly, stoppered and transferred into a nitrogen glove bag wherein the flask was unsealed and the 200 g of iron powder are added to the solution. The ethanol was removed with a rotary evaporator at reduced pressure (70-75 Torr) in a 30°C water bath. Ethanol removal was stopped when the iron mixture had the appearance of wet sand. Final ethanol removal was completed by placing the flask (unstoppered) in a vacuum oven set at 10-12 Torr and 30°C for 16-18 hours.

The dried solid product, in the form of a crusty mass, was shaken in the flask to break it up and then lightly ground to obtain a flowable powder which was stored in a sample jar inside a nitrogen glove bag.

The chlorine content of the solid product showed that virtually all the chlorine added as AlCl₃ was deposited upon the iron.

Table A shows the efficient and rapid oxygen reactivity of the powder. The theoretical consumption of 300 cm³ O₂/gram iron was achieved in approximately 2 days.

The composition was stored for 4 months in nitrogen at room temperature. The oxygen absorption rate after four months remained practically unchanged from the rate when immediately made.

The composition of EXAMPLE 1 was heat treated under a hot nitrogen stream for 30 minutes at temperatures of 150°, 200°, and 250° C. While there was a loss in weight over time, no real impact on oxygen absorption rate was observed.

Table B shows the container properties when the composition was incorporated into a 52.5 gram preform and made into the wall of a 2 Liter PET (containing 2% isophthalic acid units) bottle.

### EXAMPLE 2

The preparation was the same as EXAMPLE 1 but the amount of AlCl₃ dissolved in ethanol and deposited on iron was varied from 0.5, 1, 1.5 and 2 wt% (calculated as AlCl₃) by weight of iron. These examples are labelled 2A, 2B, 2C, and 2D respectively.

Samples of the dried solid product were tested for oxygen absorption rate 1, 3, 6 and 8 days. The results of days 1 and 3 are presented in Table A.

### EXAMPLE 3

The preparation of EXAMPLE 1 was repeated. The only difference being that the aluminum chloride (5.0 g, 2.5% wt. AlCl₃ based on weight of iron) was added to a stirred suspension of iron powder (200 g) in ethanol (500 ml) under a nitrogen atmosphere. After drying, a sample of the solid product was tested for the rate of oxygen absorbance. The results are listed in Table A.

### EXAMPLE 4

The preparation of EXAMPLE 1 was repeated with aluminum bromide substituted for AlCl₃ (5.0 g, 2.5% wt. AlBr₃ based on weight of iron). The results are listed in Table A.

### EXAMPLE 5

The preparation of EXAMPLE 1 was repeated using carbon monoxide reduced sponge iron in place of electrolytic iron.

The oxygen absorption tested at 1, 3, 6 and 8 days was 120, 240, 280 and 300 ml oxygen/g iron-Al compound composition, respectively. The 1 and 3 day data are listed in Table A.

### EXAMPLE 6

The preparation of EXAMPLE 1 was repeated with other organic solvents substituted for ethanol. The solvents substituted for ethanol were methanol, 1-butanol, 1-hexanol, diethyl ether and ethyl acetate and are labelled 6A, 6B, 6C, 6D, and 6E respectively.

Samples of the dried solid iron products were tested for oxygen absorption rate by the test listed in the Analytical Procedures section and are listed in Table A.

### EXAMPLE 7

All operations of this example were conducted in a way to exclude or minimize the presence of oxygen.

A solution of ferrous chloride (FeCl₂, 2.68% wt. FeCl₂ based on weight of oxygen scavenger iron to give 1.50% wt. Chloride on the iron) in ethanol was prepared by reacting a slight stoichiometric excess of iron powder and aqueous concentrated hydrochloric acid, and then deposited onto the oxygen scavenging iron powder as detailed below.

Electrolytic iron powder (2.38 g), absolute ethanol (50 ml), and aqueous concentrated hydrochloric acid (8.20 g) were added to a 1000 ml reaction flask, (previously purged with nitrogen for 10 minutes). The iron and concentrated HCl are reacted at room temperature under a nitrogen atmosphere until the evolution of hydrogen stops, leaving a clear solution with a light green tint and a small amount of unreacted excess iron. The flask is stoppered and put into a nitrogen glove bag. Inside the glove bag, additional absolute ethanol (450 ml) and the iron powder (200 g) were added to the original solution. The ethanol was removed from the resulting mixture under reduced pressure (70-75 Torr, 30°C water bath). Final ethanol removal from the solid was accomplished by placing the unstoppered flask in a vacuum oven at 30°C and 10-12mm Hg for 16 hours. The dried solid product was broken up inside a nitrogen glove bag, scraped out of the flask, and lightly ground to obtain a flowable powder and stored under nitrogen until use. After final ethanol removal, the solid product was tested for oxygen absorbance rate at room temperature by the test listed in the Analytical Procedures section. The results are listed in Table A.

### EXAMPLE 7A

Ferrous chloride is prepared and deposited onto iron powder in a one step procedure following the general methods in EXAMPLE 7. The ferrous chloride (2.68% wt. FeCl₂ to give 1.50% wt. Chloride) was generated *in situ* by the addition of aqueous concentrated hydrochloric acid (0.0846 moles HCl) to a stirred suspension of iron powder (202.36 g) in ethanol (500 ml) under a nitrogen atmosphere. The amount of iron used is equal to the oxygen scavenger iron (200.00 g) plus the amount of iron (2.36 g) needed to react with the concentrated HCl to form the desired amount ferrous chloride. After drying, a sample of the solid product was tested for oxygen absorbance rate at room temperature by the test listed in the Analytical Procedures section. The results are listed in Table A.

### EXAMPLE 7B

The preparation of EXAMPLE 1 is repeated with the only difference being that anhydrous solid ferrous chloride (7.13 g, 3.57% weight based on iron to give 1.9% wt. Chloride, Aldrich Chemical #45,094-4) was substituted for aluminium chloride and dissolved in ethanol. A sample of the dried solid product was tested for oxygen absorbance rate at room temperature by the test listed in the Analytical Procedures section. The results are listed in Table A.

### EXAMPLE 8

The preparation of EXAMPLE 7 was repeated, the only difference being that a solution of ferrous acetate (2.68% weight based on weight of oxygen scavenger iron) in ethanol was prepared from a slight stoichiometric excess of iron powder and glacial acid, which is then deposited onto the oxygen scavenging iron powder. A sample of the dried solid product was tested for oxygen absorbance rate at room temperature by the test listed in the Analytical Procedures section. The results are listed in Table A.

### EXAMPLE 9 - Comparison

Under a nitrogen atmosphere, aluminium chloride powder was added directly to electrolytic iron powder at 2.5% and 10% weight based on the weight of iron and blended for two hours at room temperature on a roller mill. These are labelled 9A and 9B, respectively. 2 Liter bottles were made and sidewalls properties measured. The oxygen and visual data for the 2.5 wt% is presented in table C. The Hunter haze for the 10% blend at 3000ppm iron was 53% and well above any commercially acceptable criteria for a transparent bottle.

### EXAMPLES 10 - Comparison

Compositions were made blending iron and NaCl (8% weight based on weight of iron) and blending iron and NaHSO₄ (10% weight based on weight of iron as described in U.S Patent # 5885481). These blends were prepared by adding the appropriate salt directly into the iron powder and mechanical blending of the mixture in a rotary mill. These two compositions are labelled 10A and 10B respectively and were converted into 2 Liter bottles containing 4000 ppm of either blend. They were converted into bottles by mixing the respective blend with PET, injection blow molding 52.5g preforms, and blowing the preforms into 2 liter bottles. The accelerated oxygen absorbance rate at 50°C, the Hunter Haze, and the drop in intrinsic viscosity are shown in Table B.

### EXAMPLE 11 - Comparison

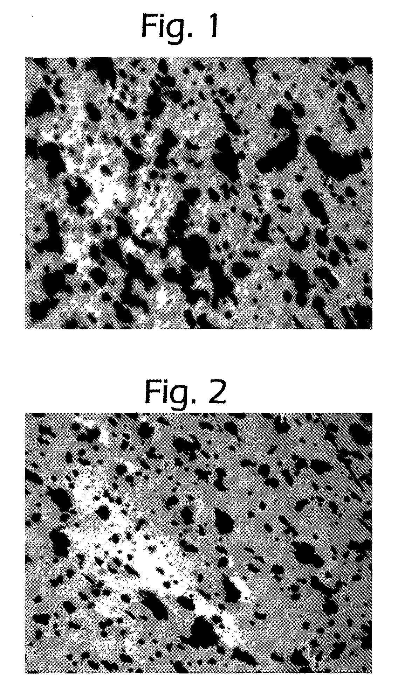

A dry blend of 3000 ppm weight iron of Freshblend ™ Scavenger from Multisorb Technologies, Buffalo, New York USA was injection molded with PET into a 52.5 gram preform and made into a bottle (See "Multiple Functionality Sorbents", Calvo, William D. Proceedings of ACTIVEPack Conference, p9 (2003) (announcing the commercialisation of Freshblend ™ for polyester). The sidewall was subjected to the accelerated oxygen absorbance test (.11 cm³ O₂/g polymer/1000 ppm Fe). After three days a light photomicrograph at 50x (Fig. 1) was taken and compared to photomicrograph of example 1 at 3 days (Fig. 2). While the compositions had comparable oxygen scavenger absorbance, size of the blooms is significantly smaller for Example 1, the subject of the current invention. Additionally, the I.V. drop for Example 11 was 0.10, about 5 times greater than example 1.

**TABLE A**

| Example | Type | O₂ Reacted (cm³ O₂/gram iron powder) | | |
|---|---|---|---|---|
| | | day 1 | day 2 | day 3 |
| 1 | 2.5% AlCl₃ - Ethanol | 272 | 292 | |
| 2A | 0.5% AlCl₃ - Ethanol | 249 | | 234 |
| 2B | 1.0% AlCl₃ - Ethanol | 274 | | 270 |
| 2C | 1.5% AlCl₃ - Ethanol | 276 | | 310 |
| 2D | 2.0% AlCl₃ - Ethanol | 272 | | 314 |
| 3 | 2.5% AlCl₃ - Ethanol / One-Step | 268 | 301 | |
| 4 | 2.5% AlBr₃ - Ethanol | 252 | | 283 |
| 5 | 2.5% AlCl₃ - Ethanol, CO reduced sponge Iron | 120 | | 280 |
| 6A | 2.5% AlCl₃ - Methanol | 285 | 293 | |
| 6B | 2.5% AlCl₃ - Butanol | 278 | 289 | |
| 6C | 2.5% AlCl₃ - Hexanol | 261 | 293 | |
| 6D | 2.5% AlCl₃ - Diethyl Ether | 260 | 250 | |
| 6E | 2.5% AlCl₃ - Ethyl Acetate | 262 | 293 | |
| 7 | 1.5% Cl - in situ FeCl₂ / Ethanol | 300 | | 297 |
| 7A | 1.5% Cl - in situ FeCl₂ / Ethanol / One-Step | 298 | 292 | |
| 7B | 1.9% Cl - FeCl₂ / EtOH | 276 | 303 | |
| 8 | 2.68% Fe(II) Acetate-Ethanol | 117 | | 189 |

**TABLE B -**

| PET Bottle Sidewalls | | | | |
|---|---|---|---|---|
| Example | Composition, Ppm in PET sidewall | O₂ reacted in 10 days cm³ O₂/gmPET/1000ppm Fe | Hunter Haze (%) | I.V. loss during injection molding |
| 1 | 2.5% AlCl3 -Ethanol, 3000 ppm | 0.109 | 15.69 | 0.016 |
| 7A | 1.5% FeCl₂ -Ethanol, 3000 ppm | 0.079 | 13.96 | 0.032 |
| 10A | 8 Wt % NaCl Blend, 4000ppm Fe-NaCl Blend with PET | 0.047 | 38.80 | 0.081 |
| 10B | 10 Wt% NaHSO₄ Blend, 4000 ppm Fe | 0.085 | 37.10 | 0.080 |

**Table C -**

| Dry Blend versus organic deposition | | | | |
|---|---|---|---|---|
| EXAMPLE | Fe Composition | O₂ reacted in 3 Days cm³ O₂/gm PET/ 1000ppm Fe | Hunter Haze (%) | IV Loss During Injection Molding |
| 9A | 2.5 wt% AlCl₃ Dry Blend, 3000ppm in PET | 0.014 | 19.84 | 0.031 |
| 1 | 2.5 wt% AlCl₃ - Ethanol, 3000ppm in PET | 0.045 | 15.69 | 0.016 |

### Analytical Procedures

### Oxygen Absorbance Test - Iron Powder

Samples of powder of the iron-containing compositions are weighed into 20 ml vials, activated with water and crimp sealed. Prior to weighing the samples, the vials are flushed with nitrogen and capped. Samples of about 10 mg are weighed to nearest 0.1 mg on a balance inside a nitrogen glove bag, placed into the vial and the vial recapped. The sample is activated by uncapping the iron filled vial, gently blowing out the vial for 30 seconds with dry air (passed through a CaSO₄ column) and adding deionized water (4 µl) via a 10 µl syringe. The tubes are sealed and time started. The iron powders are stored at room temperature (RT, 18-22°C). The individual tubes are analysed by gas chromatography for consumption of oxygen vs. a control at the prescribed time interval. Each time point is the average of three determinations.

### Accelerated Oxygen Absorbance Test - Polymer Samples

Bottle sidewall samples of the iron-containing compositions are cut to a predetermined size with a template and the sidewall sample weights (to the nearest 0.01 g) are recorded. The samples are placed into 20 ml vials, activated with 2 ml of aqueous 0.001 M acetic acid and crimp sealed. The sidewall samples are stored at 50°C. The individual tubes are analysed by gas chromatography for consumption of oxygen vs. a control at the prescribed time interval. Each point is the average of three individual determinations.

Intrinsic Vicosity is determined by ASTM D-4603-86 at 30 °C in a 60/40 by weight mixture of phenol and tetrachloroethane.

### The Hunter haze measurement

The measurements were taken through the bottle side-walls. A HunterLab ColorQUEST Sphere Spectrophotometer System equipped with an IBM PS/2 Model 50Z computer, IBM Proprinter II dot matrix printer, assorted specimen holders, and green, gray and white calibration tiles, and light trap was used. The HunterLab Spectrocolorimeter integrating sphere sensor is a color and appearance measurement instrument. Light from the lamp is diffused by the integrating sphere and passed either through (transmitted) or reflected(reflectance) off an object to a lens. The lens collects the light and directs it to a diffraction grating that disperses it into its component wave lengths. The dispersed light is reflected onto a silicon diode array. Signals from the diodes pass through an amplifier to a converter and are manipulated to produce the data. Haze data is provided by the software. It is the calculated ratio of the diffuse light transmittance to the total light transmittance multiplied by 100 to yield a "Haze %" (0% being a transparent material, and 100% being an opaque material). Samples prepared for either transmittance or reflectance must be clean and free of any surface scratches or abrasion. The size of the sample must be consistent with the geometry of the sphere opening and in the case of transmittance, the sample size is limited by the compartment dimension. Each sample is tested in four different places, for example on the bottle sidewall or representative film area.

A Panametrics Magna-Mike 8000 Hall Effect Thickness Gauge was employed to measure the bottle sidewall thickness.

## Claims

1. A container from a film-forming polymer, having at least one wall comprising an effective amount of an oxygen-scavenging composition wherein said oxygen scavenging composition comprises oxidizable metal particles and at least one water hydrolysable Lewis acid salt and/or its adducts, wherein said water hydrolysable Lewis acid salt and/or its adducts have been deposited upon the oxidizable metal from an essentially moisture free solution comprising an organic solvent.

2. The wall of the container according to claim 1, wherein the oxygen-scavenging composition comprises iron.

3. The wall of the container according to claim 2, wherein the salt deposited on iron is AlCl₃.

4. The wall of the container according to claim 3, wherein the AlCl₃ is deposited in the form of an adduct made from the interaction of AlCl₃ with at least one organic solvent.

5. The wall of the container according claim 4, wherein the AlCl₃ is deposited in form of an adduct made from the interaction of AlCl₃ with at least one organic solvent, wherein the at least one organic solvent is from the group consisting of ethanol, methanol, propanol, butanol, hexanol, diethyl ether, or ethyl acetate.

6. The wall of the container according to claim 2, wherein the salt deposited on iron is FeCl₂.

7. The wall of the container according to any one of claim 2, 3, 4 and 6, wherein the water hydrolysable Lewis acid salt is deposited on iron from a solution of essentially moisture free organic solvents.

8. A container according to claim 7, wherein the solvent is ethanol.

9. A container according to claim 7, wherein AlCl₃ and/or FeCl₂ are deposited on iron from a solution in an alcohol selected from the group consisting of ethanol, methanol, isopropanol, butanol, and hexanol.

10. A container according to any one of claims 1 to 9, wherein the effective amount of the oxygen-scavenging composition is from 1000 to 10,000 part by weight per million part by weight of the wall of the container.

11. A container according to any one of claims 1 to 10, wherein the film-forming polymer is an aromatic polyester.

12. A container according to claim 10, wherein the aromatic polyester is selected from the group consisting of polyethylene terephthalate and copolymers thereof wherein up to 10% by moles of units of terephthalic acid are substituted by units from isophthalic acid and/or naphthalene dicarboxylic acids.

13. A container according to any one of claims 10 to 12, wherein the wall has a transmission Hunter haze of up 0.04 percent per µm of the container wall.

14. A container according to any one of claims 10-13, which is a stretched bottle.

15. A container according to claim 13, wherein the sidewall of the stretched bottle is 280 to 410 microns thick and has Hunter haze values of 20% or less.

16. A container according to claim 15, wherein the container does not exhibit any visible blooms after three days of accelerated oxygen absorbance.

17. An oxygen scavenging composition that reacts with oxygen in the presences of humidity or liquid phase water, comprising oxidizable particles, wherein said oxidizable particles comprise an oxidizable metal, an oxidizable metal compound or mixtures thereof, and a water hydrolyzable Lewis acid salt deposited onto the oxidizable particles from an essentially moisture free organic solution.

18. A composition according to claim 17, wherein the water hydrolysable Lewis acid salt is AlCl₃ or its adducts from the interaction with organic electron-donor compounds.

19. A composition according to claim 17, wherein the Lewis acid salt is FeCl₂.

20. A composition according to claim 17 or 18, wherein the water hydrolysable Lewis acid salt is deposited on iron from an essentially moisture free organic solution.

21. A composition according to claim 17 through 20, wherein the water hydrolysable Lewis acid salt is deposited on the oxidizable metal particle from an essentially moisture free ethanol solution.

22. A composition according to any one of claims 17 to 21, wherein the composition is heat-treated at 100° to 250°C for 20-60 minutes.

23. A composition according to any one of claims 17 to 22, wherein the hydrolysable Lewis acid salt is present in amount from 0.1 to 5 wt% on the weight of oxidizable metal particles.

24. A composition according to any one of claims 17 to 23, wherein the iron is annealed electrolytic reduced iron having average numeral size of the particles of 5-80 µm.

25. An aromatic polyester wherein a composition according to any one of claims 17 to 25 is incorporated.

26. An aromatic polyester according to claim 25, wherein the polyester is selected from the group consisting of polyethylene terephthalate and the copolymers thereof in which up to 10% by moles of terephthalic acid units are substituted by units from isophthalic acid and/or naphthalene dicarboxylic acids.

27. A preform from an aromatic polyester into which is incorporated an iron-based oxygen-scavenging composition, wherein the intrinsic viscosity loss of the preform attributed to the scavenger is less than 60% of the I.V. loss of the preform without the scavenger.

28. A preform according to claim 27, wherein the oxygen-scavenging composition is according to any one of claims 17 to 25.

29. A film-forming polymer incorporating oxygen-scavenging compositions according to any one of claims 17 to 25, selected from the group consisting of polyamides, polycarbonate, PVC and polyolefins.
